# EUROPÄISCHE PATENTSCHRIFT

(11) **EP 2 981 433 B1**
(45) Veröffentlichungstag und Bekanntmachung des Hinweises auf die Patenterteilung: **13.11.2019**
(21) Anmeldenummer: 14713872.1
(22) Anmeldetag: 01.04.2014
(51) Int. Cl.: B60N 2/235, B60N 2/22

(54) **BESCHLAGSYSTEM FÜR EINEN FAHRZEUGSITZ UND FAHRZEUGSITZ**
FITTING SYSTEM FOR A VEHICLE SEAT AND VEHICLE SEAT
SYSTÈME DE FERRURE POUR UN SIÈGE DE VÉHICULE, ET SIÈGE DE VÉHICULE CORRESPONDANT

(30) Priorität: 05.04.2013 DE 102013206096; 07.06.2013 DE 102013210688
(43) Veröffentlichungstag der Anmeldung: 10.02.2016
(73) Patentinhaber: Adient Luxembourg Holding S.à r.l., 1855 Luxembourg (LU)
(72) Erfinder: ASSMANN, Uwe, 42855 Remscheid (DE)
(74) Vertreter: Liedhegener, Ralf
(86) Internationale Anmeldenummer: PCT/EP2014/056521
(87) Internationale Veröffentlichungsnummer: WO 2014/161851

(56) Entgegenhaltungen:
- WO-A1-2004/103764
- WO-A1-2011/160771
- DE-A1-102008 045 349
- DE-A1-102012 006 227
- US-A1- 2012 228 915

## Beschreibung

Die Erfindung betrifft ein Beschlagsystem für einen Fahrzeugsitz mit den Merkmalen des Oberbegriffs des Anspruches 1 sowie einen Fahrzeugsitz.

### Stand der Technik

Ein Beschlagsystem dieser Art ist aus der WO 2011/160771 A1 bekannt. Eine spezielle Rückstellfeder hält das Anschlagmodul in Anschlagsposition zu dem Beschlag. Die Rückstellfeder weist ein erstes und ein zweites Federende auf, die beide, in radialer Richtung gesehen, nicht über die äußere Kontur des Anschlagmoduls hinaus ragen, so dass die Federenden während der Montage des Anschlagsmoduls an den Beschlag nicht sichtbar sind. Dies erschwert das Einfädeln des ersten Federendes in einen Halter des Beschlages. Das zweite Federende ist in eines von acht Löchern eingehängt. Aufgrund der Mehrzahl von Löchern kann es zu einem versehentlichen Einhängen des zweiten Federendes in ein dazu nicht vorgesehenes Loch kommen. Das Einfädeln des zweiten Federendes in eines der Löcher erfordert zudem eine exakte Positionierung des zweiten Federendes über dem entsprechenden Loch.

Die DE 10 2012 006 227 A1 offenbart ein Beschlagsystem für einen Fahrzeugsitz, das zwei Anschlagmodule umfasst. Ein erstes Anschlagmodul ist einteilig an einem ersten Bedienelement angeformt, das auf einer linken Sitzaußenseite montiert ist. Ein zweites Anschlagmodul ist einteilig an einem zweiten Bedienelement angeformt, das auf einer rechten Sitzaußenseite montiert ist. Das erste Bedienelement und das zweite Bedienelement weisen untereinander eine deutlich unterschiedliche Form auf, so dass es bei einer Montage der Bedienelemente an den Fahrzeugsitz nicht zu Vertauschungen kommen kann.

Aus der WO 2005 016 685 A1 ist ein Beschlag für einen Fahrzeugsitz, insbesondere für einen Kraftfahrzeugsitz, mit einem ersten Beschlagteil, einem relativ zu diesem verdrehbaren und verriegelbaren zweiten Beschlagteil und einer profilierten Welle, deren Betätigung den Beschlag entriegelt, bekannt, wobei eine Feder die Welle gegen die Betätigungsrichtung vorspannt und die Feder zugleich die Welle gegenüber dem Beschlag in axialer Richtung der Welle sichert.

Aus der WO 2011/160771 A1 ist ein Beschlagsystem für einen Fahrzeugsitz bekannt, mit einem Beschlag, welcher ein erstes Beschlagteil und ein zweites Beschlagteil aufweist, die miteinander verriegelbar und relativ zueinander um eine Achse verdrehbar sind, einer Übertragungsstange, deren Drehung den Beschlag entriegelt, und einem Handhebel, dessen Betätigung zum Entriegeln des Beschlags die Übertragungsstange dreht. Ein Anschlagmodul, welches in Wirkverbindung einerseits mit dem Handhebel und andererseits mit der Übertragungsstange steht, ist um die Achse drehbar am Beschlag gelagert, und bringt in wenigstens einer Drehrichtung gedreht das Anschlagmodul und eines der Beschlagteile relativ zueinander in Anschlag. Im Inneren des Anschlagmoduls ist eine Rückstellfeder angeordnet, die aus Federdraht schraubenförmig gewickelt ist. Die beiden Federenden stehen entgegengesetzt axial ab. Beide Federenden sind innerhalb des Anschlagmoduls angeordnet.

Die DE 10 2008 045 349 A1 offenbart einen Beschlag für einen Fahrzeugsitz mit einem ersten Beschlagteil, einem zweiten Beschlagteil, welches relativ zum ersten Beschlagteil verdrehbar und mit dem ersten Beschlagteil verriegelbar ist, einer um eine Achse drehbaren Welle, deren Betätigung mittels Drehung den Beschlag entriegelt, einer Feder, welche die Welle entgegen der Betätigungsrichtung vorspannt, und einem auf der Welle montierten Hebel, welcher mit der Welle auf Mitnahme gekoppelt ist, wobei die Feder durch die Montage des Hebels auf die Welle zwangsweise gespannt wird.

Aus der US 2012/0228915 ist ein Beschlagsystem für einen Fahrzeugsitz bekannt, mit einem Beschlag, welcher ein erstes Beschlagteil und ein zweites Beschlagteil aufweist, die mittels einer Verriegelungsvorrichtung miteinander verriegelbar und relativ zueinander um eine Achse verdrehbar sind, einer Übertragungsstange, deren Drehung den Beschlag entriegelt, und einem Handhebel, dessen Betätigung zum Entriegeln des Beschlags die Übertragungsstange dreht. Zum Verhindern einer Übertragung großer Belastungen vom Handhebel auf die Verriegelungsvorrichtung umfasst das Beschlagsystem einen mit der Übertragungsstange drehfest verbundenen Lastbegrenzer, der eine Nockenanordnung aufweist, die in Vertiefungen in einem der beiden Beschlagteile eintaucht und nach einem begrenzten Drehwinkel an Wänden der Vertiefungen anschlägt. Eine Rückstellfeder spannt den Handhebel in Richtung einer Ruhestellung vor.

Die WO 2004/103754 A1 offenbart eine Doppelverstellvorrichtung für Kraftfahrzeugsitze, die Doppelverstellvorrichtung aufweisend ein Achswellenelement mit einer longitudinalen Spalte, einen beweglichen Betätigungshebel mit einem Flansch, welcher eine zentrale Passage aufweist, die in eine Stufungsanordnung des Achswellenelements eingreift, und ein externes Federmittel, das mit einem Ende in den unteren Teil des Betätigungshebels eingehakt ist und mit dem anderen Ende in der longitudinalen Spalte des Achswellenelements gesichert ist, um den Betätigungshebel in Richtung einer Ruhestellung vorzuspannen.

### Aufgabe

Der Erfindung liegt die Aufgabe zu Grunde, ein Beschlagsystem der eingangs genannten Art zu verbessern, insbesondere die Montage des Anschlagmoduls an den Beschlag zu erleichtern und unbeabsichtigte Montagefehler zu vermeiden. Zudem soll ein Fahrzeugsitz zur Verfügung gestellt werden, der einfach und mit geringer Fehlerwahrscheinlichkeit montiert werden kann.

### Lösung

Diese Aufgabe wird erfindungsgemäß durch einen Beschlag mit den Merkmalen des Anspruches 1 und einen Fahrzeugsitz mit den Merkmalen des Anspruches 13 gelöst.

Vorteilhafte Ausgestaltungen, welche einzeln oder in Kombination miteinander eingesetzt werden können, sind Gegenstand der Unteransprüche.

Dadurch, dass eines der beiden Federenden an einer in radialer Richtung außerhalb des Anschlagmoduls angeordneten Federaufnahme befestigbar, insbesondere eingehängt, ist, ist dieses Federende während der Montage des Anschlagsmoduls an den Beschlag oder an den Fahrzeugsitz sichtbar und zur manuellen Feinpositionierung erreichbar.

Das außerhalb des Anschlagmoduls angeordnete Federende ist vorzugsweise an einer Federaufnahme eines Sitzteiladapters des Sitzteils befestigt, insbesondere in diese eingeführt oder eingehängt. Auf diese Weise lässt sich eine kostengünstige und leicht montierbare Federbefestigung zur Verfügung stellen.

Das Anschlagmodul ist separat vom Handhebel ausgebildet. Somit kann der Handhebel im Montageverlauf zeitlich nach der Befestigung des Federendes an die Federaufnahme des Sitzteiladapters mit dem Anschlagmodul verbunden werden. Es ist dadurch möglich, die korrekte Montage der Feder zu prüfen, bevor der Handhebel mit dem Anschlagmodul verbunden wird und gegebenenfalls die Sicht auf das Federende verdeckt. Sollen für unterschiedliche Fahrzeugsitze unterschiedliche Bedienelemente, beispielsweise in unterschiedlicher Form und/ oder unterschiedlicher Farbe, verwendet werden, so können aufgrund der separaten Ausbildung von Handhebel und Anschlagmodul immer die gleichen Anschlagmodule verwendet werden. Es müssen lediglich die Bedienelemente selbst individuell gestaltet werden, was Kosten, insbesondere Werkzeugkosten, reduziert.

Eine axiale Sicherung des Federndes in einer lochförmigen Federaufnahme lässt sich wirkungsvoll erreichen, indem das Federende mit einer Parallelen zur Drehachse des Beschlages einen geringfügigen Winkel von vorzugsweise 2° bis 15° einschließt.

Im Anschlagmodul befindet sich nur genau ein Loch zur Federeinhängung des anderen der beiden Federenden, so dass ein Einhängen in ein dazu nicht vorgesehenes Loch vermieden wird. Eine insbesondere umlaufende Verrundung eines Übergangsbereiches zwischen der zylindrischen Wandung dieses Loches und einem Boden des Gehäuses des Anschlagmoduls erleichtert das Einfädeln des anderen der beiden Federenden und vermeidet eine Kollision mit dem Biegeradius der Rückstellfeder.

Das Anschlagmodul weist vorzugsweise einen annähernd topfförmigen Grundkörper mit einer weitgehend zylinderförmigen Wand und einem Boden, der den von der zylinderförmigen Wand gebildeten Zylinder schließt, auf. Dieser topfförmige Grundkörper bietet der Rückstellfeder ein geschütztes Gehäuse.
Das Anschlagmodul ist als Gleichteil ausgebildet und kann somit auf der linken Seite und der rechten Seite des Fahrzeugsitzes verwendet werden. Die Rückstellfeder für die linke Sitzseite ist spiegelsymmetrisch zu einer Rückstellfeder für die rechte Sitzseite.

Das Anschlagmodul umfasst eine erste Markierung und eine zweite Markierung. Im montierten Zustand auf der linken Sitzseite fluchtet bei einer korrekten Paarung von einer linken Rückstellfeder mit dem Anschlagmodul ein Federschenkel der Rückstellfeder mit der ersten Markierung. Auf der rechten Sitzseite fluchtet bei einer korrekten Paarung von einer rechten Rückstellfeder mit dem Anschlagmodul der Federschenkel mit der zweiten Markierung. Bei Verwendung einer falschen (spiegelsymmetrischen) Feder, fluchtet der Federschenkel nicht mit der entsprechenden Markierung.

Das erfindungsgemäße Beschlagsystem umfasst wenigstens einen Beschlag, eine Übertragungsstange, einen Handhebel, ein Anschlagmodul, eine Rückstellfeder und optional eine Lehnenkompensationsfeder. Das Beschlagsystem umfasst vorzugsweise zusätzlich einen Sitzteiladapter, der jedoch auch Bestandteil des übrigen Fahrzeugsitzes sein kann.

Das Anschlagmodul, welches in Wirkverbindung einerseits mit dem Handhebel und andererseits mit der Übertragungsstange steht und welches in wenigstens eine Drehrichtung den Handhebel und eines der Beschlagteile relativ zueinander in Anschlag bringt, erfüllt mehrere Funktionen.

Die erste Funktion, die sich aus der Wirkverbindung ergibt, ist die Übertragung des Drehmomentes vom Handhebel auf die Übertragungsstange, welche das Drehmoment in die Beschläge überträgt, wenn der Handhebel in die Entriegelungsrichtung geschwenkt wird. Die Übertragung des Drehmomentes ist vorzugsweise auf einen definierten Winkelbereich begrenzt, so dass der Handhebel nur zwischen einer Ausgangsstellung und einer maximalen Auslenkung schwenkbar ist.

Die erste Funktion ist Voraussetzung für die zweite Funktion, nämlich die Missbrauchssicherung, bei welcher die Übertragung des Drehmomentes unterbrochen wird, indem der Handhebel und das eine der Beschlagteile relativ zueinander in Anschlag gebracht werden, so dass das Drehmoment das besagte Beschlagteil beaufschlagt, also wirkungslos ist. Dadurch werden die inneren Bauteile des Beschlags geschützt. Dies ist insbesondere für die Drehung in der Verriegelungsrichtung wichtig, weil dann die inneren Bauteile des Beschlags bereits ihre Endposition einnehmen und eine weitere Beaufschlagung durch die Übertragungsstange unmittelbar zu Beschädigungen führen würde. Die zweite Funktion des Anschlagmoduls als Missbrauchssicherung kann aber auch dahingehend erweitert werden, dass das Anschlagmodul auch wirksam wird, wenn der Beschlag entriegelt ist, und die Übertragungsstange weiter in die Entriegelungsrichtung gedreht wird. Das Anschlagmodul begrenzt dann den Winkelbereich für die Betätigung des Handhebels.

Eine dritte Funktion ist das Entklappern, indem das Anschlagmodul mittels der Rückstellfeder in Anschlag an den Beschlag gehalten wird, was (unterhalb der Vorspannung der Rückstellfeder) eine Relativbewegung der mit dem Anschlagmodul in Wirkverbindung stehenden Übertragungsstange verhindert. Um die Rückstellfeder baulich aufzunehmen, ist das Anschlagmodul vorzugsweise topfförmig ausgebildet. Als vierte Funktion des Anschlagsmoduls kann die Definition der Endlage des Handhebels angesehen werden.

Für die in Umfangsrichtung wirksame erste Funktion sind vorzugsweise drehfeste Verbindungen zwischen Handhebel und Anschlagmodul und zwischen Anschlagmodul und Übertragungsstange vorgesehen, beispielsweise entsprechend profilierte Aufnahmen, Öffnungen, Rippen oder Nuten. Für die ebenfalls in Umfangsrichtung wirksame zweite Funktion sind die Anschläge und Gegenanschläge vorzugsweise axial abstehend ausgebildet, mit entsprechenden Erstreckungen in radialer Richtung, um große Anschlagflächen in Umfangsrichtung zu bilden. Die Gegenanschläge sind vorzugsweise am zugeordneten Beschlagteil angeformt, d.h. einteilig mit diesem ausgebildet, können aber alternativ auch separat hergestellt und am Beschlagteil befestigt sein.

Für die axiale Sicherung zwischen Handhebel und Anschlagmodul sowie zwischen Anschlagmodul und den anderen Bauteilen des Beschlags können Rastnasen und Rastöffnungen und/oder Clipshaken und Ringe oder Ringwulste vorgesehen sein. Drehfeste Verbindungen und axiale Sicherungen können übergreifend zwischen unterschiedlichen Gliedern der Wirkverbindung bestehen. Beispielsweise bietet es sich für das Anschlagmodul und die strangförmig profilierte Übertragungsstange an, das nächste Glied, nämlich den von der Übertragungsstange zu drehenden Mitnehmer im Inneren des Beschlags zur axialen Sicherung zu verwenden, indem dieser beispielsweise einen - vorzugsweise angeschweißten - Befestigungsring erhält.

Das erfindungsgemäße Beschlagsystem wird in Fahrzeugsitzen bevorzugt zur Einstellung der Lehnenneigung eingesetzt, kann aber auch an anderen Stellen verwendet werden. Eine Ausführung des Beschlags als scheibenförmige Einheit ermöglicht beliebige Winkeländerungen zwischen den Beschlagteilen durch die relative Verdrehung um die Achse. Der axiale Zusammenhalt der Beschlagteile wird durch einen Umklammerungsring erzeugt, welcher das relativ zu ihm bewegliche, erste Beschlagteil mittels eines radial nach innen gebogenen Randes radial außen übergreift, und welcher mit dem zweiten Beschlagteil fest verbunden ist. Unter den Begriff Umklammerungsring sind auch einfach geformte, weitgehend scheibenförmige Halteringe zu verstehen, die eine im Wesentlichen flache Ringform aufweisen, wie diese beispielsweise in der nachveröffentlichten DE 10 2012 023 057 offenbart ist.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:

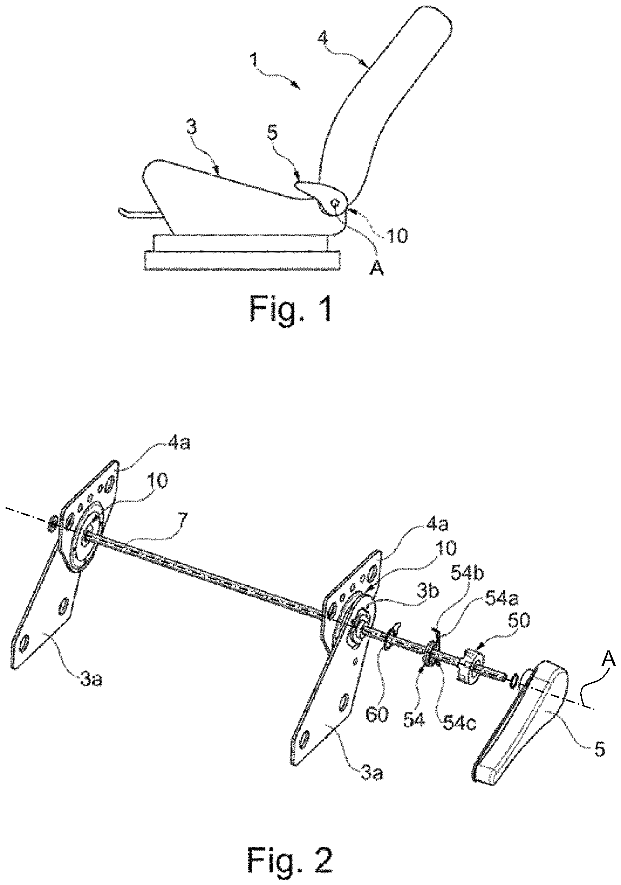

- Fig. 1:: eine schematische Darstellung eines Fahrzeugsitzes,
- Fig. 2:: eine Darstellung des Beschlagsystems in teilweiser Explosionsdarstellung,

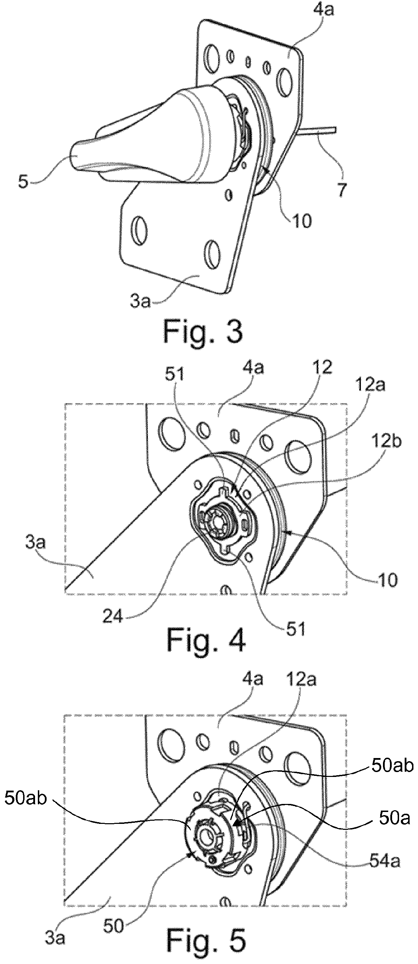

- Fig. 3:: eine perspektivische Teilansicht des Beschlagsystems, montiert an einem Sitzteiladapter und einem Lehnenadapter,
- Fig. 4:: eine Fig. 3 entsprechende Ansicht ohne Handhebel, Anschlagmodul, Übertragungsstange und Rückstellfeder,
- Fig. 5:: eine Fig. 3 entsprechende Ansicht ohne Handhebel und Übertragungsstange,

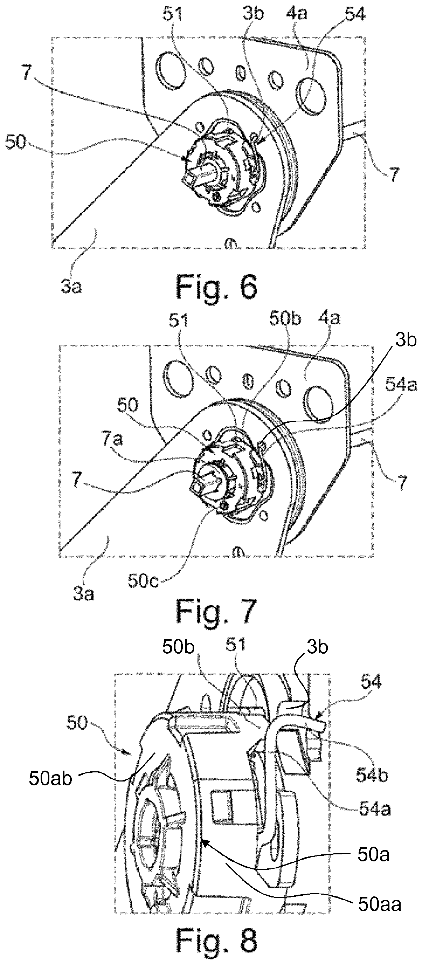

- Fig. 6:: eine Fig. 3 entsprechende Ansicht ohne Handhebel und ohne Sicherungsscheibe der Übertragungsstange,
- Fig. 7:: eine Fig. 6 entsprechende Ansicht mit Sicherungsscheibe der Übertragungsstange,
- Fig. 8:: eine perspektivische Ansicht auf einen Teilbereich des Beschlagsystems mit geschnitten dargestelltem Sitzteiladapter,

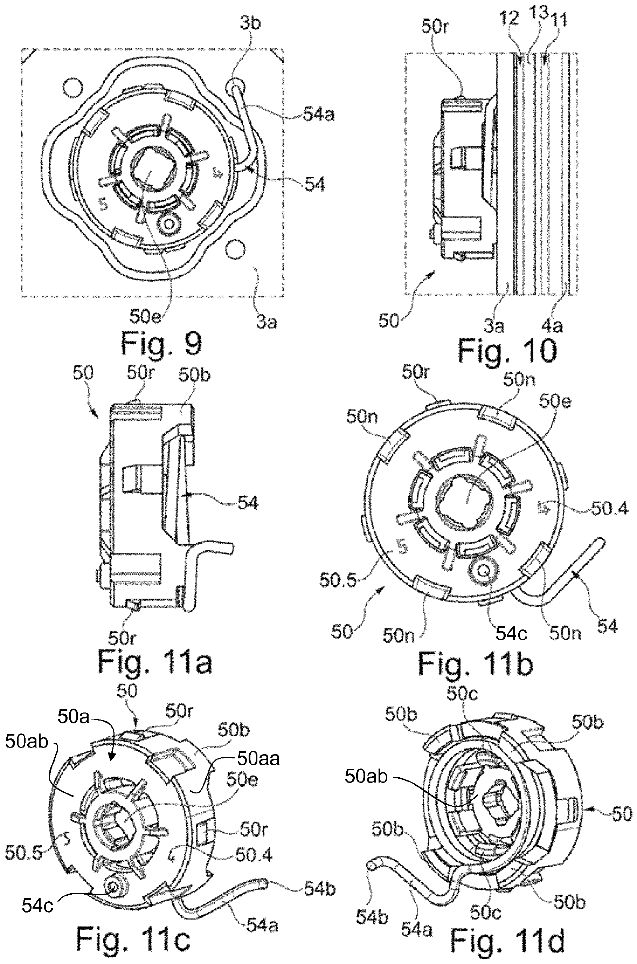

- Fig. 9:: eine Ansicht in axialer Richtung auf das Beschlagsystem ohne Handhebel und Übertragungsstange,
- Fig. 10:: eine Ansicht in radialer Richtung auf das Beschlagsystem ohne Handhebel und Übertragungsstange,
- Fig. 11a-d:: das Anschlagmodul mit vormontierter, noch ungespannter Rückstellfeder in unterschiedlichen Perspektiven,

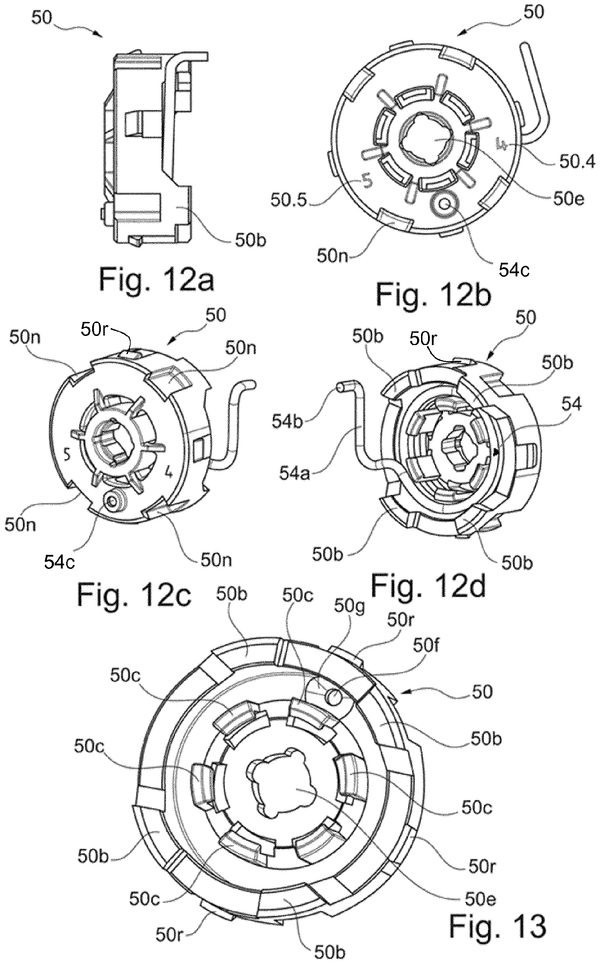

- Fig. 12a-d:: das Anschlagmodul mit vormontierter und gespannter Rückstellfeder in unterschiedlichen Perspektiven,
- Fig. 13:: eine Fig. 11d entsprechende Ansicht ohne Rückstellfeder und

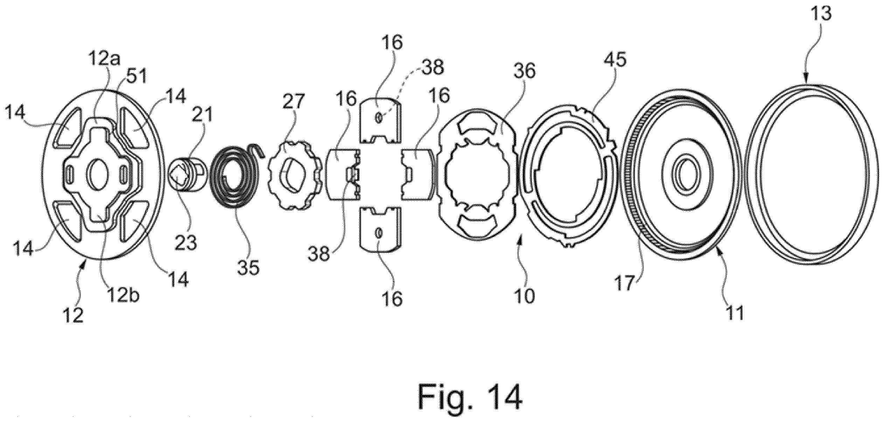

- Fig. 14:: eine Explosionsdarstellung eines Beschlages.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handhebels 5, eine Übertragungsstange 7 gedreht, welche horizontal im Übergangsbereich zwischen Sitzteil 3 und Lehne 4 angeordnet ist. Auf beiden Seiten des Fahrzeugsitzes 1 greift die Übertragungsstange 7 jeweils in einen Beschlag 10 ein. Die Übertragungsstange 7 definiert die verwendeten Richtungsangaben eines Zylinderkoordinatensystems, insbesondere die radiale und die axiale Richtung.

Der Beschlag 10 ist als Rastbeschlag ausgebildet, bei welchem ein erstes Beschlagteil 11 und ein zweites Beschlagteil 12 miteinander verriegelbar und nach dem Entriegeln relativ zueinander um eine (mit der Übertragungsstange 7 fluchtende) Achse A verdrehbar sind, wie es beispielsweise in der DE 10 2006 015 560 B3 beschrieben ist.

Die beiden Beschlagteile 11 und 12 lassen sich jeweils näherungsweise in eine kreisrunde Scheibenform einbeschreiben. Zur Aufnahme der axial wirkenden Kräfte, also zum Zusammenhalt der Beschlagteile 11 und 12 ist ein Umklammerungsring 13 vorgesehen. Ein solcher Zusammenhalt mittels eines Umklammerungsrings ist beispielsweise in der US 6,799,806 B2 beschrieben. Der vorzugsweise metallische Umklammerungsring 13 ist fest mit einem der beiden Beschlagteile 11 und 12 verbunden, beispielsweise mit dem zweiten Beschlagteil 12, vorzugsweise verschweißt oder - indem er das mit ihm verbundene Beschlagteil übergreift - umgebördelt. An einer Stirnseite weist der Umklammerungsring 13 einen radial nach innen gebogenen Rand auf, mittels welchem er, gegebenenfalls unter optionaler Zwischenlage eines separaten Gleitrings, das andere der beiden Beschlagteile 11 und 12, beispielsweise das erste Beschlagteil 11, radial außen übergreift, ohne die Relativbewegung der beiden Beschlagteile 11 und 12 zu behindern. In baulicher Hinsicht bilden die beiden Beschlagteile 11 und 12 daher zusammen (mit dem Umklammerungsring 13) eine scheibenförmige Einheit. In einer Abwandlung des Ausführungsbeispiels ist der Umklammerungsring 13 ein einfach geformter, weitgehend scheibenförmiger Haltering, der eine im Wesentlichen flache Ringform aufweist, wie diese beispielsweise in der nachveröffentlichten DE 10 2012 023 057 offenbart ist.

Nach der Montage des Beschlags 10 ist das erste Beschlagteil 11 beispielsweise fest mit der Struktur der Lehne 4, vorliegend einem Lehnenadapter 4a, also lehnenfest, verbunden,. Das zweite Beschlagteil 12 ist dann fest mit der Struktur des Sitzteils 3, vorliegend mit einem Sitzteiladapter 3a, also sitzteilfest, verbunden,. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest.

Das zweite Beschlagteil 12 weist - vorliegend vier - Führungssegmente 14 auf, welche mit geraden Führungsflächen paarweise jeweils einen Riegel 16 seitlich in radialer Richtung führen. Die - vorliegend insgesamt vier - Riegel 16 sind - vorliegend um je 90° - versetzt zueinander in einem zwischen den beiden Beschlagteilen 11 und 12 definierten Bauraum angeordnet. Die Riegel 16 sind an ihrem radial außen liegenden Ende mit einer Verzahnung versehen, die mit einem Zahnkranz 17 des als Hohlrad ausgebildeten ersten Beschlagteils 11 in Eingriff gelangen (einfallen) kann. Wenn der Zahnkranz 17 und die Riegel 16 zusammenwirken, ist der Beschlag 10 verriegelt. Die Führungssegmente 14 liegen mit jeweils einer gebogenen Lagerfläche am Zahnkranz 17 des ersten Beschlagteils 11 an, wodurch die beiden Beschlagteile 11 und 12 einander lagern.

Alternativ ist das erste Beschlagteil 11 in einer Vertiefung des zweiten Beschlagteils 12 angeordnet und wird durch dieses radial außen übergriffen, wodurch die beiden Beschlagteile 11 und 12 einander lagern. Dabei ist der radial äußere Randbereich des ersten Beschlagteils 11 mit dem Zahnkranz 17 in radialer Richtung zwischen den Führungssegmenten 14 und dem (der Lagerung des ersten Beschlagteils 11 dienenden) radial äußeren Randbereich des zweiten Beschlagteils 12 angeordnet. Bei hohen Belastungen, beispielsweise im Crashfall, kann das erste Beschlagteil 11 - nach einer Verformung - mit seinem Zahnkranz 17 in Anlage an die Lagerflächen der in Lastrichtung näher gelegenen Führungssegmente 14 kommen. Dies erhöht die Festigkeit des Beschlags 10.

Im Zentrum des Beschlags 10 ist ein Mitnehmer 21 angeordnet, beispielsweise aus Kunststoff, welcher drehbar an wenigstens einem der beiden Beschlagteile 11 und 12, vorliegend in beiden Beschlagteilen 11 und 12, gelagert ist, genauer gesagt in einer zentralen Öffnung derselben. Auf beiden Fahrzeugsitzseiten ist der Mitnehmer 21 drehfest verbunden oder wenigstens auf Mitnahme gekoppelt mit der Übertragungsstange 7, welche in eine Bohrung 23 des hohlen Mitnehmers 21 eingeführt ist. In axialer Richtung ist der Mitnehmer 21 mittig von größerem Durchmesser als an seinen in den Beschlagteilen 11 und 12 gelagerten Enden, so dass die beiden Beschlagteile 11 und 12 den Mitnehmer 21 axial sichern. An einem Ende des Mitnehmers 21, vorliegenden demjenigen am zweiten Beschlagteil 12, ist ein Befestigungsring 24 vorgesehen, welcher vorliegend aus Kunststoff besteht und vorzugsweise mittels Ultraschallschweißens am Mitnehmer 21 befestigt ist.

Auf dem Mitnehmer 21 sitzt drehfest oder wenigstens auf Mitnahme gekoppelt ein Exzenter 27, welcher in dem zwischen den Beschlagteilen 11 und 12 definierten Bauraum angeordnet ist. Eine Federanordnung 35, vorliegend eine Spiralfeder, ist in einer zentralen Aufnahme eines der beiden Beschlagteile 11 und 12, vorliegend des zweiten Beschlagteils 12, angeordnet und vorliegend außen abgestützt. Die Federanordnung 35 beaufschlagt den Exzenter 27, vorliegend indem sie innen drehfest auf dem Mitnehmer 21 sitzt. Eine alternative Federanordnung 35 mit zwei ineinander geschachtelten Spiralfedern ist beispielsweise in der DE 10 2005 046 807 B3 beschrieben. Der von der Federanordnung 35 beaufschlagte Exzenter 27 wirkt auf die radial beweglichen Riegel 16 ein und beaufschlagt diese, so dass sie radial nach außen gedrückt werden, um in den Zahnkranz 17 einzufallen, womit der Beschlag 10 verriegelt ist.

Eine Steuerscheibe 36 ist in dem Bauraum axial zwischen den Riegeln 16 und dem ersten Beschlagteil 11 angeordnet und sitzt vorliegend drehfest auf dem Exzenter 27. Die Steuerscheibe 36 weist - vorliegend vier - Steuerbahnen auf, die jeweils mit einer Nase 38 jedes Riegels 16 zusammenwirken. Die Nasen 38 stehen dabei in axialer Richtung von den ihnen zugeordneten Riegeln 16 ab. Bei einer Drehung (um wenige Grad) des Mitnehmers 21 - und des damit angetriebenen Exzenters 27 und der Steuerscheibe 36 - entgegen der Kraft der Federanordnung 35 zieht die Steuerscheibe 36 die Riegel 16 radial nach innen, d.h. aus dem Zahnkranz 17, womit der Beschlag 10 entriegelt ist und die beiden Beschlagteile 11 und 12 relativ zueinander um die Achse A verdrehbar sind. Die Neigung der Lehne 4 ist dadurch zwischen mehreren, zum Sitzgebrauch geeigneten Gebrauchsstellungen einstellbar.

Bei zweitürigen Kraftfahrzeugen soll mittels eines Freischwenkens der Lehne 4 der Zugang zu einer hinteren Sitzreihe erleichtert werden, wofür die entriegelte Lehne 4 aus einer der Gebrauchsstellungen nach vorne in eine nicht zum Sitzgebrauch geeignete, freigeschwenkte Stellung geschwenkt wird. Es erhöht den Bedienkomfort, wenn der Handhebel 5 - oder ein weiteres Betätigungselement - nicht während des gesamten Freischwenkens gehalten werden muss und die Beschläge trotzdem erst in der freigeschwenkten Stellung verriegeln. Im Beschlag 10 ist hierfür zwischen der Steuerscheibe 36 und dem ersten Beschlagteil 11 um die Achse A herum optional ein ringförmiges Freischwenk-Steuerelement 45 vorgesehen, welches drehfest mit dem ersten Beschlagteil 11 verbunden ist. Das Freischwenk-Steuerelement 45 weist Anschlagbahnen auf, die mit den Nasen 38 der Riegel 16 zusammenwirken, indem sie deren Bewegung radial nach außen begrenzen oder diese ungehindert einfallen lassen. Um die Lehne 4 über mehr als den Winkel zwischen zwei Riegeln 16 freischwenken zu können, sind die Nasen 38 der Riegel 16 abwechselnd unterschiedlich weit radial außen oder radial innen an den ihnen zugeordneten Riegeln 16 angeordnet, so dass benachbarte Nasen 38 mit unterschiedlichen Anschlagbahnen zusammenwirken. Entsprechend sind zwei unterschiedliche Ausbildungen der Riegel 16 vorgesehen. Details sind in der DE 10 2006 015 560 B3 beschrieben.

Die beiden Beschläge 10, die Übertragungsstange 7 und der Handhebel 5 sind Teile eines Beschlagsystems, zu welchem optional auch wenigstens eine Lehnenkompensationsfeder gehört, die an einem der beiden Beschläge 10 angeordnet sein kann. Im vorliegenden Ausführungsbeispiel ist keine Lehnenkompensationsfeder vorgesehen.

Es kann auch an jedem der beiden Beschläge 10 eine in den Figuren nicht dargestellte Lehnenkompensationsfeder vorgesehen sein. Die Lehnenkompensationsfeder ist aus einem Federstahlband mit näherungsweise rechteckförmigem Querschnitt hergestellt und als Spiralfeder ausgebildet.

Das innere Ende der Lehnenkompensationsfeder ist am zugeordneten Beschlag 10 abgestützt. Hierzu weist der Beschlag 10 eine in den Figuren nicht dargestellte Stützbuchse auf, welche an einem der beiden Beschlagteile 11 oder 12 befestigt ist und mit der Achse A fluchtet. Die Stützbuchse besteht vorzugsweise aus Metall, insbesondere Stahl. Die Befestigung erfolgt vorzugsweise mittels Laserschweißens. Hierzu wird die Stützbuchse mit ihrer ringförmigen Stirnseite am betreffenden Beschlagteil 11 oder 12 angesetzt und dann an diesem angeschweißt. Die Lehnenkompensationsfeder liegt dann mit ihrer innersten Windung auf der zylindrischen Außenseite der Stützbuchse auf und ist mit ihrem Ende beispielsweise in einen Schlitz der Stützbuchse eingehängt.

Das äußere Ende der Lehnenkompensationsfeder ist an einem Stützelement abgestützt, so dass sie aufgrund ihrer Vorspannung die Lehne 4 beaufschlagt. Das Stützelement kann beispielsweise ein axial abstehender Bolzen, eine axial ausgestellte Lasche oder ein axialer Vorsprung eines Stützringes sein. Vorliegend ist das Stützelement am Lehnenadapter 4a befestigt, von dem es axial absteht. Die Vorspannung ist so gewählt, dass die Lehnenkompensationsfeder in den möglichen Gebrauchsstellungen der Lehne 4 das Gewicht der Lehne 4 wenigstens teilweise kompensiert.

Es bestehen zwei Möglichkeiten, wo die Stützbuchse am Beschlag 10 befestigt ist. Die Stützbuchse kann in einer ersten Variante am ersten Beschlagteil 11 befestigt sein, welches vorliegend lehnenfest ist. Oder die Stützbuchse ist in einer abgewandelten zweiten Variante am zweiten Beschlagteil 12 befestigt, welches vorliegend sitzteilfest ist. Entsprechend ist der zum Abstützen des äußeren Endes der Lehnenkompensationsfeder vorgesehene Bolzen oder Stützring oder dergleichen in der ersten Variante fest mit dem Sitzteil 3 verbunden, beispielsweise angeschweißt, wenn die Stützbuchse am lehnenfesten ersten Beschlagteil 11 befestigt ist. In der zweiten Variante ist der zum Abstützen des äußeren Endes der Lehnenkompensationsfeder vorgesehene Stützring oder die sonstige Abstützung fest mit der Lehne 4 verbunden, beispielsweise angeschweißt, wenn die Stützbuchse am sitzteilfesten zweiten Beschlagteil 12 befestigt ist.

Das zweite Beschlagteil 12 weist auf seiner Außenseite (also der vom ersten Beschlagteil 11 abgewandten Seite) einen ersten Sternabsatz 12a auf, dessen (vorliegend) vier Strahlen oder Arme zwischen den (vorliegend) vier Führungssegmenten 14 angeordnet sind. Auf diesem ersten Sternabsatz 12a ist ein zweiter Sternabsatz 12b von kleinerer Abmessung als der erste Sternabsatz 12a angeordnet. So ergibt sich ein terrassenartiger Aufbau, der vorliegend aufgrund des Prägens des zweiten Beschlagteils 12 ausgebildet wird. Der erste Sternabsatz 12a dient der Befestigung des Beschlags 10 an der Struktur, vorliegend an dem sitzteilfesten Sitzteiladapter 3a, indem der erste Sternabsatz 12a in eine passende Öffnung des Sitzteiladapters 3a gesteckt und mit diesem fest verbunden, vorzugsweise laserverschweißt, ist. Der zweite Sternabsatz 12b stellt auf seiner dem Inneren des Beschlags 10 zugewandten Seite einen Bauraum für die Federanordnung 35 zur Verfügung.

Der zweite Sternabsatz 12b ragt durch die Öffnung des Sitzteiladapters 3a hindurch und steht auf der anderen Seite der Struktur axial über. In der ersten Variante ist die Außenseite des zweiten Beschlagteils 12 von der Stützbuchse und damit der Lehnenkompensationsfeder abgewandt. In der zweiten Variante ist die Stützbuchse am zweiten Sternabsatz 12b axial abstehend angeordnet und dort fest mit dem zweiten Beschlagteil 12 verbunden, vorzugsweise angeschweißt. Die dem zweiten Beschlagteil 12 zugewandte Stirnseite der Stützbuchse kann dabei zinnenartige Vorsprünge aufweisen, welche vorzugsweise formschlüssig mit dem zweiten Sternabsatz 12b zusammenwirken und so die Stützbuchse vorpositionieren.

Zwischen dem Handhebel 5 und dem ihm benachbarten Beschlag 10, also nur auf einer Fahrzeugsitzseite, ist ein Anschlagmodul 50 vorgesehen. Das Anschlagmodul 50 hat einen topfförmigen Grundkörper 50a und ist vorzugsweise als Kunststoff-Spritzguss-Teil ausgeführt. Der topfförmige Grundkörper 50a umfasst im Wesentlichen eine zylinderförmige Wand 50aa und einen den daraus gebildeten Zylinder schließenden Boden 50ab.

Das Anschlagmodul 50 ist mit seiner offenen Seite dem zweiten Beschlagteil 12 zugewandt. Die Zylinderachse der Wand 50aa fluchtet mit der Achse A. An der offenen Seite des Anschlagmoduls 50 ist der Rand der zylindrischen Wand 50aa des Anschlagmoduls 50 wie eine Krone ausgebildet, indem entlang des Randes mehrere, vorliegend vier, angeformte (d.h. einteilig mit dem Anschlagmodul 50 ausgebildet) Anschläge 50b axial abstehen. Aus dem Inneren des Anschlagmoduls 50 ragen mehrere, vorliegend sechs, insbesondere am Boden 50ab angeformte, Clipshaken 50c axial hervor, welche konzentrisch zu den Anschlägen 50b angeordnet sind. Die Clipshaken 50c hintergreifen den Befestigungsring 24 des Mitnehmers 21 in axialer Richtung unter Bildung einer Clipsverbindung, wodurch das Anschlagmodul 50 mit dem Beschlag 10 (auf dessen Außenseite) drehbar, aber in axialer Richtung formschlüssig gesichert, verbunden ist.

Vier Strahlen oder Arme des zweiten Sternabsatzes 12b definieren vier Gegenanschläge 51, die in Umfangsrichtung zum Zusammenwirken mit den Anschlägen 50b des Anschlagmoduls 50 geeignet sind.

Wenn das Anschlagmodul 50 mit dem Mitnehmer 21 verbunden, also vorliegend verclipst, ist, sind die vier Anschläge 50b mit viel Spiel in Umfangsrichtung, beispielsweise 30°, zwischen den Gegenanschlägen 51 angeordnet. Vorzugsweise liegen die Anschläge 50b mit ihren axialen Stirnseiten am ersten Sternabsatz 12a (bzw. der freien Stirnseite der Stützbuchse) an.

Im Inneren des Anschlagmoduls 50, in radialer Richtung zwischen der Wand 50aa und den Clipshaken 50c, ist eine Rückstellfeder 54 angeordnet. Die Rückstellfeder 54 ist vorzugsweise aus Federdraht schraubenförmig gewickelt und umfasst ein erstes Federende 54b und ein zweites Federende 54c. Die beiden Federenden 54b, 54c sind umgebogen und stehen (in annähernd entgegengesetzter Richtung) axial von dem schraubenförmigen Grundkörper der Rückstellfeder 54 ab.

Zwischen dem schraubenförmigen Grundkörper der Rückstellfeder 54 und dem ersten Federende 54b befindet sich ein Federschenkel 54a. Der Federschenkel 54a verläuft ausgehend vom Grundkörper der Rückstellfeder 54 zunächst S-förmig nach außen und anschließend linear, weitgehend tangential und radial versetzt zu dem schraubenförmigen Grundkörper der Rückstellfeder 54. Der Federschenkel 54a verbindet den schraubenförmigen Grundkörper der Rückstellfeder 54 mit dem ersten Federende 54b. Der schraubenförmige Grundkörper der Rückstellfeder 54, der Federschenkel 54a, das ersten Federende 54b und das zweite Federende 54c sind vorliegend aus einem einzigen Federdraht gebogen.

Der Sitzteiladapter 3a umfasst eine Federaufnahme 3b, die vorliegend als Loch ausgebildet ist und dem Einhängen (also der Befestigung) des ersten Federendes 54b der Rückstellfeder 54 dient.

Vorliegend ist das erste Federende 54b gegenüber einer Parallelen zur Achse A geringfügig, vorzugsweise um 2° bis 15°, nach geneigt, so dass das erste Federende 54b mit der Federaufnahme 3b in axialer Richtung derart zusammenwirken kann, das das erste Federende 54b formschlüssig in axialer Richtung gesichert ist.

Im Boden 50ab des Anschlagmoduls 50, also seiner weitgehend geschlossenen Stirnseite, ist eine zentrale Öffnung 50e vorgesehen, die in axialer Richtung durchgängig ausgebildet und konzentrisch zur zylindrischen Wand 50aa mit den Anschlägen 50b und konzentrisch zu den Clipshaken 50c angeordnet ist. Die profilierte zentrale Öffnung 50e fluchtet mit der Übertragungsstange 7 und nimmt diese drehfest auf.

Exzentrisch zur zentralen Öffnung 50e ist eine Federeinhängung 50f angeordnet, die axial durchgängig im Boden 50ab des Anschlagmoduls 50 ausgebildet ist. In dieser Federeinhängung 50f ist das zweite Federnde 54c der Rückstellfeder 54 eingesteckt (und damit befestigt). Der Übergangsbereich 50g zwischen dem Loch der Federeinhängung 50f und dem Boden 50ab des Anschlagmoduls 50 ist verrundet.

In der zylindrischen Wand 50aa des Anschlagmoduls 50 sind mehrere, vorliegend vier, Nuten 50n ausgebildet, welche in axialer Richtung verlaufen und mit einem Ende am Boden 50ab des Anschlagmoduls 50 münden. Vorliegend fluchtet jeweils eine Nut 50n mit jeweils einem der Anschläge 50b. In Umfangsrichtung zwischen den Nuten 50n sind an der zylindrischen Wand 50aa des Anschlagmoduls 50 mehrere, vorliegend vier, Rastnasen 50r ausgebildet. Die Rastnasen 50r weisen eine vom Boden 50ab des Anschlagmoduls 50 her ansteigende Flanke und daran anschließend eine radial nach innen springende Flanke auf.

Der Handhebel 5 besteht vorzugsweise aus Kunststoff und ist vorzugsweise als ein einteiliges Bauteil ausgebildet. Der Handhebel 5 weist (als Teilbereich) eine Aufnahme auf, in welche das Anschlagmodul 50 beim Aufstecken des Handhebels 5 (in axialer Richtung) eingeführt wird. Die Aufnahme nimmt dann den größten Teil des Anschlagmoduls 50 auf. Die Aufnahme wird begrenzt von einer Wand, an welcher mehrere, vorliegend vier, Rippen ausgebildet sind, die in axialer Richtung verlaufen. Die Rippen werden beim Aufstecken des Handhebels 5 auf das Anschlagmodul 50 (formschlüssig) in die Nuten 50n eingeführt. Der Handhebel 5 und das Anschlagmodul 50 sind dadurch in Umfangsrichtung drehfest miteinander verbunden, so dass eine Übertragung von Drehmomenten möglich ist. Optional sind (weitere) axiale Vorsprünge am Handhebel 5 und Vertiefungen am Anschlagmodul 50 ausgebildet, beispielsweise radial zwischen der zentralen Öffnung 50e und der Federeinhängung 50f, welche zusätzlich einen Formschluss zwischen dem Handhebel 5 und dem Anschlagmodul 50 schaffen.

In der Wand des Handhebels 5 sind ferner mehrere, vorliegend vier, Rastöffnungen - in radialer Richtung durchgängig - ausgebildet. Beim Aufstecken des Handhebels 5 auf das Anschlagmodul 50 gelangen die Rastnasen 50r in die Rastöffnungen unter Bildung einer Clipsverbindung, d.h. der in der Richtung des Aufsteckens voreilende Rand jeder Rastöffnung hintergreift die zugeordnete Rastnase 50r. Der Handhebel 5 ist dadurch in axialer Richtung am Anschlagmodul 50 gesichert.

Eine Sicherungsscheibe 7a, die als an sich bekannter Schnellbefestiger ausgebildet ist, sichert die Übertragungsstange 7 - zusätzlich zur drehfesten Verbindung in Umfangsrichtung - in axialer Richtung am Anschlagmodul 50. Die Übertragungsstange 7 ist dadurch gegen ein Verschieben in den Beschlag 10, d.h. in den Mitnehmer 21, hinein gesichert. Das Verschieben der Übertragungsstange 7 aus dem Beschlag 10 heraus verhindert auch der Handhebel 5, an den die Übertragungsstange 7 in axialer Richtung in Anlage gelangt.

Das Anschlagmodul 50 steht folglich in Wirkverbindung einerseits mit dem Handhebel 5 und andererseits der Übertragungsstange 7, und ist in der Regel in Serie zwischen diesen beiden Bauteilen gelegen. Das Anschlagmodul 50 bewirkt als eine erste Funktion die Übertragung des Drehmoments des betätigten Handhebels 5 auf die Übertragungsstange 7 (welche das Drehmoment in die Mitnehmer 21 der beiden Beschläge 10 überträgt), wenn der Handhebel 5 in die Entriegelungsrichtung geschwenkt wird. Das Schwenken des Handhebels 5 erfolgt gegen die Kraft der Rückstellfeder 54 und wird begrenzt durch die Anlage der Anschläge 50b an die in Entriegelungsrichtung gelegenen Gegenanschläge 51.

Das Anschlagmodul 50 bringt in wenigstens einer Drehrichtung den Handhebel 5 und den Beschlag 10 relativ zueinander in Anschlag.

Als zweite Funktion dient das Anschlagmodul 50 als Missbrauchssicherung. Wird bei verriegelten Beschlägen 10 versucht, den Handhebel 5 entgegen der Entriegelungsrichtung zu schwenken, also in die Verriegelungsrichtung, so verhindert die Anlage der Anschläge 50b an die Gegenanschläge 51, dass sich das Anschlagmodul 50 - und damit auch die Übertragungsstange 7 - dreht.

Als dritte Funktion erfüllt das Anschlagmodul 50 eine Entklapperungsfunktion. Im verriegelten Zustand der beiden Beschläge 10 wird mittels der Rückstellfeder 54 das Anschlagmodul 50 mit seinen Anschlägen 50b in Anlage an die in Verriegelungsrichtung gelegenen Gegenanschläge 51 des zweiten Beschlagteils 12 gehalten. Damit wird die Übertragungsstange 7 bis zu einer der Vorspannung der Rückstellfeder 54 entsprechenden Kraft festgehalten, was ein Klappern wenigstens bei leichten Erschütterungen verhindert. Soll die Übertragungsstange 7 auch für größere Erschütterungen entklappert bleiben, ist die Rückstellfeder 54 entsprechend stark zu wählen und vorzuspannen. Das Anschlagmodul 50 mit der Rückstellfeder 54 bringt den Handhebel 5 in eine definierte Endlage, was als vierte Funktion gesehen werden kann. Ferner kann die Rückstellfeder 54 auch zur Massenkompensation des Handhebels 5 im Crashfall dienen, so dass die Massenträgheit des Handhebels 5 nicht zum Entriegeln des Beschlags 10 führt.

Das Anschlagmodul 50 ist als Gleichteil ausgebildet und kann somit auf der linken Seite und auf der rechten Seite des Fahrzeugsitzes 1 verwendet werden. Lediglich die Rückstellfeder 54 für die linke Sitzseite ist spiegelsymmetrisch zu der Rückstellfeder 54 für die rechte Sitzseite. Das Anschlagmodul 50 umfasst eine erste Markierung 50.4 und eine zweite Markierung 50.5. Im montierten Zustand auf der linken Sitzseite fluchtet bei einer korrekten Paarung von einer linken Rückstellfeder 54 mit dem Anschlagmodul 50 der Federschenkel 54a mit der ersten Markierung 50.4. Auf der rechten Sitzseite fluchtet bei einer korrekten Paarung von einer rechten Rückstellfeder 54 mit dem Anschlagmodul 50 der Federschenkel 54a mit der zweiten Markierung 50.5. Bei Verwendung einer falschen (spiegelsymmetrischen) Rückstellfeder fluchtet der Federschenkel 54a nicht mit der entsprechenden Markierung 50.4, 50.5.

Optional ist eine an sich bekannte Nichtverriegelungsanzeige 60 in Form einer auf den Mitnehmer 21 aufgesteckten Lasche vorgesehen.

Die Endmontage des Beschlagsystems umfasst die folgenden Schritte:
In einem optionalen ersten Schritt wird die Nichtverriegelungsanzeige 60 am Mitnehmer 21 positioniert.

In einem weiteren Schritt wird die Rückstellfeder 54 (in zuvor beschriebener Anordnung) in das Anschlagmodul 50 vormontiert und somit eine Vorbaugruppe definiert. Die Rückstellfeder 54 wird anschließend gespannt.

In einem weiteren Schritt wird die Vorbaugruppe aus Anschlagmodul 50 und vorgespannter Rückstellfeder 54 mit dem Befestigungsring 24 des Mitnehmers 21 des Beschlages 10 verclipst. Dabei fädelt das erste Federende 54b in die Federaufnahme 3b ein.

In einem weiteren Schritt wird die Übertragungsstange 7 positioniert und montiert, indem diese durch den Mitnehmer 21 geschoben wird. Falls vorgesehen, wird dann die Sicherungsscheibe 7a auf die Übertragungsstange 7 aufgeschoben.

In einem letzten Schritt wird der Handhebel 5 positioniert und mit dem Anschlagmodul 50 verclipst.

Die in der vorstehenden Beschreibung, den Ansprüchen und den Zeichnungen offenbarten Merkmale können sowohl einzeln als auch in Kombination für die Verwirklichung der Erfindung im Rahmen der Ansprüche in ihren verschiedenen Ausgestaltungen von Bedeutung sein.

### Bezugszeichenliste

- 1: Fahrzeugsitz
- 3: Sitzteil
- 3a: Sitzteiladapter
- 3b: Federaufnahme
- 4: Lehne
- 4a: Lehnenadapter
- 5: Handhebel
- 7: Übertragungsstange
- 7a: Sicherungsscheibe
- 10: Beschlag
- 11: erstes Beschlagteil
- 12: zweites Beschlagteil
- 12a: erster Sternabsatz
- 12b: zweiter Sternabsatz
- 13: Umklammerungsring
- 14: Führungssegment
- 16: Riegel
- 17: Zahnkranz
- 21: Mitnehmer
- 23: Bohrung
- 24: Befestigungsring
- 27: Exzenter
- 35: Federanordnung
- 36: Steuerscheibe
- 38: Nase
- 45: Freischwenk-Steuerelement
- 50: Anschlagmodul
- 50a: Grundkörper
- 50aa: Wand
- 50ab: Boden
- 50b: Anschlag
- 50c: Clipshaken
- 50e: zentrale Öffnung
- 50f: Federeinhängung
- 50g: Übergangsbereich
- 50n: Nut
- 50r: Rastnase
- 50.4: erste Markierung
- 50.5: zweite Markierung
- 51: Gegenanschlag
- 54: Rückstellfeder
- 54a: Federschenkel
- 54b: erstes Federende
- 54c: zweites Federende
- 60: Nichtverriegelungsanzeige
- A: Achse

## Patentansprüche

1. Beschlagsystem für einen Fahrzeugsitz, insbesondere einen Kraftfahrzeugsitz, mit
a) wenigstens einem Beschlag (10), welcher ein erstes Beschlagteil (11) und ein zweites Beschlagteil (12) aufweist, die miteinander verriegelbar und relativ zueinander um eine Achse (A) verdrehbar sind,
b) einer Übertragungstange (7), deren Drehung den Beschlag (10) entriegelt,
c) einem Handhebel (5), dessen Betätigung die Übertragungsstange (7) zum Entriegeln des Beschlags (10) zumindest mittelbar dreht,
d) einem drehbar um die Achse (A) am Beschlag (10) gelagerten, separat vom Handhebel (5) ausgebildeten, Anschlagmodul (50), welches in Wirkverbindung einerseits mit dem Handhebel (5) und andererseits mit der Übertragungsstange (7) steht und welches in wenigstens eine Drehrichtung den Handhebel (5) und eines der Beschlagteile (11, 12) relativ zueinander in Anschlag bringt, wobei das Anschlagmodul (50) wenigstens einen Anschlag (50b) und das eine der Beschlagteile (11, 12) wenigstens einen Gegenanschlag (51) aufweist, welche in Umfangsrichtung zur Achse (A) zusammenwirken und einen Winkelbereich definieren, innerhalb dessen das Anschlagmodul (50) relativ zu dem einen Beschlagteil (11, 12) drehbar ist,
e) einer Rückstellfeder (54) mit einem ersten Federende (54b) und einem zweiten Federende (54c), wobei die Rückstellfeder (54) in einer Drehrichtung des Anschlagmoduls (50) den Anschlag (50b) in Richtung des Gegenanschlags (51) vorspannt, **dadurch gekennzeichnet, dass**
f) eines der beiden Federenden (54b, 54c) an einer in radialer Richtung außerhalb des Anschlagmoduls (50) angeordneten Federaufnahme (3b) des Beschlagsystems oder des Fahrzeugsitzes (1) befestigbar ist, und dass das Anschlagmodul (50) als Gleichteil sowohl auf einer linken Seite des Fahrzeugsitzes (1) als auch auf einer rechten Seite des Fahrzeugsitzes (1) verbaubar ist, wobei eine Rückstellfeder (54) für die linke Seite des Fahrzeugsitzes (1) abweichend zu einer Rückstellfeder (54) für die rechte Seite des Fahrzeugsitzes (1) gestaltet ist, und das Anschlagmodul (50) eine erste Markierung (50.4), die der Rückstellfeder (54) für die linke Seite des Fahrzeugsitzes (1) zugeordnet ist und eine zweite Markierung (50.5), die der Rückstellfeder (54) für die rechte Seite des Fahrzeugsitzes (1) zugeordnet ist, umfasst, wobei die erste Markierung (50.4) und die zweite Markierung (50.5) dazu geeignet sind, dass im korrekt montierten Zustand des Beschlagsystems im Fahrzeugsitz (1) ein Federschenkel (54a) der Rückstellfeder (54) im Bereich der zugeordneten Markierung (54a, 54b) verläuft.

2. Beschlagsystem nach Anspruch 1, **dadurch gekennzeichnet, dass** das eine der beiden Federenden (54b, 54c) an einer Federaufnahme (3b) eines Sitzteiladapters (3a) des Fahrzeugsitzes (1) befestigbar ist.

3. Beschlagsystem nach Anspruch 1 oder 2, **dadurch gekennzeichnet, dass** das Anschlagmoduls (50) eine, vorzugsweise genau eine, Federeinhängung (50f) zur Aufnahme des anderen der beiden Federenden (54b, 54c) umfasst.

4. Beschlagsystem nach einem der Ansprüche 1 bis 3, **dadurch gekennzeichnet, dass** das Anschlagmodul (50) einen topfförmigen Grundkörper (50a) mit einer zylinderförmigen Wand (50aa) und einem Boden (50ab) aufweist.

5. Beschlagsystem nach Anspruch 3 und 4, **dadurch gekennzeichnet, dass** die Federeinhängung (50f) als eine zylinderförmige Öffnung im Boden (50ab) des Anschlagmoduls (50) ausgebildet ist.

6. Beschlagsystem nach Anspruch 5, **dadurch gekennzeichnet, dass** die Federeinhängung (50f) als weitgehend senkrechte Öffnung in den Boden (50ab) des Anschlagmoduls (50) eingebracht ist und ein Übergangsbereich (50g) zwischen der Federeinhängung (50f) und dem Boden (50ab) abgerundet ist.

7. Beschlagsystem nach einem der Ansprüche 1 bis 6, **dadurch gekennzeichnet, dass** die Rückstellfeder (54) für die linke Seite des Fahrzeugsitzes (1) spiegelsymmetrisch zu der Rückstellfeder (54) für die rechte Seite des Fahrzeugsitzes (1) gestaltet ist.

8. Beschlagsystem nach einem der Ansprüche 1 bis 7, **dadurch gekennzeichnet, dass** das erste Federende (54b) mit einer Parallelen zur Achse (A) einen geringfügigen Winkel einschließt, vorzugsweise 2° bis 15°.

9. Beschlagsystem nach einem der Ansprüche 1 bis 8, **dadurch gekennzeichnet, dass** der Handhebel (5) und das Anschlagmodul (50) in Umfangsrichtung drehfest miteinander verbunden sind.

10. Beschlagsystem nach Anspruch 9, **dadurch gekennzeichnet, dass** an dem Anschlagmodul (50) mindestens eine Nut (50n) ausgebildet ist, die mit einer Rippe des Handhebels (5) in Umfangsrichtung formschlüssig zusammen wirkt.

11. Beschlagsystem nach einem der Ansprüche 1 bis 10, **dadurch gekennzeichnet, dass** der Handhebel (5) in axialer Richtung am Anschlagmodul (50) gesichert ist.

12. Beschlagsystem nach Anspruch 11, **dadurch gekennzeichnet, dass** mindestens eine Rastnase (50r) des Anschlagmoduls (50) unter Bildung einer in axialer Richtung sichernden Clipsverbindung in eine Rastöffnung des Handhebels (5) eingreift.

13. Fahrzeugsitz mit einem Beschlagsystem nach einem der Ansprüche 1 bis 12.

## Claims

1. Fitting system for a vehicle seat, in particular a motor vehicle seat, with
a) at least one fitting (10) which has a first fitting part (11) and a second fitting part (12), which are lockable to each other and are rotatable relative to each other about an axis (A),
b) a transmission rod (7), the rotation of which unlocks the fitting (10),
c) a hand lever (5), the actuation of which at least indirectly rotates the transmission rod (7) in order to unlock the fitting (10),
d) a stop module (50) which is mounted on the fitting (10) so as to be rotatable about the axis (A), is formed separately from the hand lever (5) and on the one hand is functionally connected to the hand lever (5) and on the other hand is functionally connected to the transmission rod (7), and which brings the hand lever (5) and one of the fitting parts (11, 12) into relative abutment in at least one rotational direction, wherein the stop module (50) has at least one stop (50b) and one of the fitting parts (11, 12) has at least one counterstop (51), which stop and counterstop interact in the circumferential direction of the axis (A) and define an angular range, within which the stop module (50) is rotatable relative to the one fitting part (11, 12),
e) a return spring (54) with a first spring end (54b) and a second spring end (54c), wherein the return spring (54) pretensions the stop (50b) in the direction of the counterstop (51) in one rotational direction of the stop module (50), **characterized in that**
f) one of the two spring ends (54b, 54c) is fastenable to a spring holder (3b) of the fitting system or of the vehicle seat (1), which spring holder is arranged outside the stop module (50) in the radial direction,
and **in that**
the stop module (50) is installable as an identical part both on a left side of the vehicle seat (1) and on a right side of the vehicle seat (1), wherein a return spring (54) for the left side of the vehicle seat (1) is configured differently from a return spring (54) for the right side of the vehicle seat (1), and the stop module (50) comprises a first marking (50.4) which is assigned to the return spring (54) for the left side of the vehicle seat (1) and a second marking (50.5) which is assigned to the return spring (54) for the right side of the vehicle seat (1), wherein the first marking (50.4) and the second marking (50.5) are suitable to the effect that, in the correctly fitted state of the fitting system in the vehicle seat (1), a spring leg (54a) of the return spring (54) runs in the region of the assigned marking (54a, 54b).

2. Fitting system according to Claim 1, **characterized in that** one of the two spring ends (54b, 54c) is fastenable to a spring holder (3b) of a seat section adapter (3a) of the vehicle seat (1).

3. Fitting system according to Claim 1 or 2, **characterized in that** the stop module (50) comprises a, preferably precisely one, spring hanger (50f) for receiving the other of the two spring ends (54b, 54c).

4. Fitting system according to one of Claims 1 to 3, **characterized in that** the stop module (50) has a cup-shaped basic body (50a) with a cylindrical wall (50aa) and a bottom (50ab).

5. Fitting system according to Claims 3 and 4, **characterized in that** the spring hanger (50f) is designed as a cylindrical opening in the bottom (50ab) of the stop module (50).

6. Fitting system according to Claim 5, **characterized in that** the spring hanger (50f) is introduced as a substantially vertical opening into the bottom (50ab) of the stop module (50), and a transition region (50g) between the spring hanger (50f) and the bottom (50ab) is rounded.

7. Fitting system according to one of Claims 1 to 6, **characterized in that** the return spring (54) for the left side of the vehicle seat (1) is configured mirror-symmetrically with respect to the return spring (54) for the right side of the vehicle seat (1).

8. Fitting system according to one of Claims 1 to 7, **characterized in that** the first spring end (54b) encloses a small angle, preferably of 2° to 15°, with a parallel to the axis (A).

9. Fitting system according to one of Claims 1 to 8, **characterized in that** the hand lever (5) and the stop module (50) are connected to each other for conjoint rotation in the circumferential direction.

10. Fitting system according to Claim 9, **characterized in that** at least one groove (50n) which interacts in a form-fitting manner in the circumferential direction with a rib of the hand lever (5) is formed on the stop module (50).

11. Fitting system according to one of Claims 1 to 10, **characterized in that** the hand lever (5) is secured on the stop module (50) in the axial direction.

12. Fitting system according to Claim 11, **characterized in that** at least one locking lug (50r) of the stop module (50) engages in a locking opening in the hand lever (5) forming a clip connection providing security in the axial direction.

13. Vehicle seat with a fitting system according to one of Claims 1 to 12.

## Revendications

1. Système de ferrure pour un siège de véhicule, en particulier un siège de véhicule à moteur, doté
a) d'au moins une ferrure (10), laquelle comporte une première pièce de ferrure (11) et une deuxième pièce de ferrure (12), lesquelles peuvent être verrouillées l'une avec l'autre et peuvent tourner l'une par rapport à l'autre autour d'un axe (A),
b) d'une tringle de transmission (7), dont la rotation déverrouille la ferrure (10),
c) d'une manette (5), dont l'actionnement fait tourner au moins indirectement la tringle de transmission (7) afin de déverrouiller la ferrure (10),
d) d'un module de butée (50) disposé en rotation autour de l'axe (A) sur la ferrure (10), réalisé comme séparé de la manette (5), lequel est relié de manière opérante à la manette (5) d'une part et à la tringle de transmission (7) d'autre part et lequel amène en butée l'une par rapport à l'autre, dans au moins un sens de rotation, la manette (5) et une des pièces de ferrure (11, 12), dans lequel le module de butée (50) comporte au moins une butée (50b) et l'une des pièces de ferrure (11, 12) comporte au moins une contre-butée (51), lesquelles coopèrent dans la direction circonférentielle de l'axe (A) et définissent une plage angulaire à l'intérieur de laquelle le module de butée (50) peut tourner relativement à l'une pièce de ferrure (11, 12),
e) d'un ressort de rappel (54) doté d'une première extrémité de ressort (54b) et d'une deuxième extrémité de ressort (54c), dans lequel, dans un sens de rotation du module de butée (50) le ressort de rappel (54) précontraint la butée (50b) dans la direction de la contre-butée (51), **caractérisé en ce**
f) **qu'**une des deux extrémités de ressort (54b, 54c) peut être fixée à un logement de ressort (3b) du système de serrure ou du siège de véhicule (1) agencé à l'extérieur du module de butée (50) dans la direction radiale, et en ce que le module de butée (50) peut être posé comme partie entière aussi bien sur un côté gauche du siège de véhicule (1) que sur un côté droit du siège de véhicule (1), dans lequel un ressort de rappel (54) pour le côté gauche du siège de véhicule (1) est disposé différemment d'un ressort de rappel (54) pour le côté droit du siège de véhicule (1), et le module de butée (50) comprend un premier marquage (50.4), lequel est ordonné au ressort de rappel (54) pour le côté gauche du siège de véhicule (1), et un deuxième marquage (50.5), lequel est ordonné au ressort de rappel (54) pour le côté droit du siège de véhicule (1), dans lequel le premier marquage (50.4) et le deuxième marquage (50.5) sont adaptés de sorte que dans l'état correctement monté du système de ferrure dans le siège de véhicule (1) une branche de ressort (54a) du ressort de rappel (54) s'étend dans la zone des marquages ordonnés (54a, 54b).

2. Système de ferrure selon la revendication 1, **caractérisé en ce qu'**une des deux extrémités de ressort (54b, 54c) peut être fixée à un logement de ressort (3b) d'un adaptateur d'assise (3a) du siège de véhicule (1).

3. Système de ferrure selon la revendication 1 ou 2, **caractérisé en ce que** le module de butée (50) comprend une, de préférence exactement une, suspension à ressort (50f) pour loger l'autre des deux extrémités de ressort (54b, 54c).

4. Système de ferrure selon l'une des revendications 1 à 3, **caractérisé en ce que** le module de butée (50) comporte un corps de base (50a) en forme de godet doté d'une paroi cylindrique (50aa) et d'un fond (50ab).

5. Système de ferrure selon la revendication 3 et 4, **caractérisé en ce que** la suspension à ressort (50f) est réalisée comme une ouverture cylindrique dans le fond (50ab) du module de butée (50).

6. Système de ferrure selon la revendication 5, **caractérisé en ce que** la suspension à ressort (50f) est pratiquée comme ouverture essentiellement perpendiculaire dans le fond (50ab) du module de butée (50) et une zone de transition (50g) entre la suspension à ressort (50f) et le fond (50ab) est arrondie.

7. Système de ferrure selon l'une des revendications 1 à 6, **caractérisé en ce que** le ressort de rappel (54) pour le côté gauche du siège de véhicule (1) est disposé en symétrie de réflexion par rapport au ressort de rappel (54) pour le côté droit du siège de véhicule (1).

8. Système de ferrure selon l'une des revendications 1 à 7, **caractérisé en ce que** la première extrémité de ressort (54b) forme avec une parallèle à l'axe (A) un léger angle, de préférence 2° à 15°.

9. Système de ferrure selon l'une des revendications 1 à 8, **caractérisé en ce que** la manette (5) et le module de butée (50) sont reliés l'un à l'autre sans rotation possible dans la direction circonférentielle.

10. Système de ferrure selon la revendication 9, **caractérisé en ce qu'**au moins une rainure (50n) est réalisée sur le module de butée (50), laquelle coopère en complémentarité de forme avec une nervure de la manette (5) dans la direction circonférentielle.

11. Système de ferrure selon l'une des revendications 1 à 10, **caractérisé en ce que** la manette (5) est assurée au module de butée (50) dans la direction axiale.

12. Système de ferrure selon la revendication 11, **caractérisé en ce qu'**au moins un ergot d'encliquetage (50r) du module de butée (50) entre en prise dans une ouverture d'encliquetage de la manette (5) pour former un raccord clipsé assurant dans la direction axiale.

13. Siège de véhicule doté d'un système de ferrure selon l'une des revendications 1 à 12.
